Europäisches Patentamt

European Patent Office

Office européen des brevets

(19)

(11) Veröffentlichungsnummer: **0 131 914**
**B1**

(12) **EUROPÄISCHE PATENTSCHRIFT**

(45) Veröffentlichungstag der Patentschrift:
14.10.87

(21) Anmeldenummer: 84108185.4

(22) Anmeldetag: 12.07.84

(51) Int. Cl.⁴: **H 01 B 1/12**, C 08 G 73/06

(54) Verfahren zur Herstellung von feinteiligen elektrisch leitfähigen Pyrrol-Polymerisaten.

(30) Priorität: 19.07.83 DE 3325892

(43) Veröffentlichungstag der Anmeldung:
23.01.85 Patentblatt 85/4

(45) Bekanntmachung des Hinweises auf die Patenterteilung:
14.10.87 Patentblatt 87/42

(84) Benannte Vertragsstaaten:
BE DE FR GB NL

(56) Entgegenhaltungen:
EP-A-0 101 894
EP-A-0 104 726

JOURNAL OF POLYMER SCIENCE, Band 20, Nr.4, April 1982; K.C.KHULBE & R.S.MANN "Polymerization of Pyrrole by Potassium Persulfate", Seiten 1089-1095
SYNTHETIC METALS, Band 4, 1981, Lausanne; K.K.KANAZAWA, A.F.DIAZ, M.T.KROUNBI U. G.B.STREET: "Electrical Properties of Pyrrole and its Co-polymers", Seiten 119-130

(73) Patentinhaber: BASF Aktiengesellschaft, Carl-Bosch- Strasse 38, D-6700 Ludwigshafen (DE)

(72) Erfinder: Naarmann, Herbert, Dr., Haardtblick 15, D-6719 Wattenheim (DE)
Erfinder: Heckmann, Walter, Dr., Geiersbergstrasse 2, D-6940 Weinheim (DE)
Erfinder: Koehler, Gernot, Dr., Berner Weg 32, D-6700 Ludwigshafen (DE)
Erfinder: Simak, Petr, Dr., Philipp- Scheidemann-Strasse 17, D-6700 Ludwigshafen (DE)

**0 131 914**

**Beschreibung**

Die Erfindung betrifft ein Verfahren zur Herstellung von feinteiligen elektrisch leitfähigen Pyrrol-Polymerisaten.

Aus D.E. Weiss et al, Austr. J. Chem., Seiten 1056, 1076 und 1096 (1963) ist die Pyrolyse von Tetraiodpyrrol bekannt. Hierbei entstehen elektrisch leitfähige Pulver mit hohen Leitfähigkeiten.

Nach Arbeiten von A. F. Diaz et al, J.C.S. Chem. Comm. 1979, Seite 635; J.C.S. Chem. Comm. 1979, Seite 854 und ACS Org. Coat. Plast. Chem. 43 (1980), werden bei der anodischen Polymerisation von Pyrrol in Gegenwart von Leitsalzen Filme mit elektrischen Leitfähigkeiten bis zu $10^2$ S/cm gebildet. Hierbei handelt es sich um p-leitende Polypyrrole, wobei als Gegenanionen vor allem $BF_4^-$, $AsF_6^-$, $ClO_4^-$ und $HSO_4$ genannt werden.

Nach einer Arbeit von K.C. Khulke und R.S. Mann, Journal of Polymer Science, vol 20 (1982), Seiten 1089 bis 1055, kann Pyrrol in wäßriger Lösung unter der Einwirkung von Kaliumpersulfat in Abwesenheit von Leitsalzen polymerisiert werden, so daß sich das Polymeriset in Form eines feinteiligen schwerzen Pulvers abscheidet, des geringe Mengen der vom Pasulfat herrührenden Anionenanteile enthält.

Für viele Anwendungszwecke, beispielsweise zur Herstellung von Elektronik-Bauteilen, elektrischen Schaltern, speziellen Elektrodenmaterialien etc. ist es notwendig oder erstrebenswert, die elektrisch leitfähigen feinpulvrigen Pyrrol-Polymeren durch einen weiteren Verarbeitungsschritt in die gewünschte Anwendungsform zu überführen. Beispielsweise müssen pulverförmlge Pyrrol-Polymere für die Anwendung im allgemeinen zu entsprechenden Formkörpern verpreßt werden. Gemäß der älteren, nicht vorveröffentlichten EP-A2-0 101 894 (deutsche Patentenmeldung P 32 27 914.0) können feinteilige Pyrrol-Polymere bei Temperaturen von 150 bis 300° C und bei Drucken von mindestens 50 bar zu Formkörpern verpreßt werden.

Es hat sich gezeigt, daß die bislang zur Verfügung stehenden feinteiligen Pyrrol-Polymeren in ihren Eigenschaften noch nicht allen Anforderungen genügen. Insbesondere ist die elektrische leitfähigkeit nicht ausreichend.

Aufgabe der Erfindung ist es daher, feintilige elektrische leitfähige Pyrrol-Polymerisate zu schaffen, die sich für die Verarbeitung zu Formkörpern besser eigen.

Die Aufgabe der Erfindung wird durch ein einfaches Verfahren gelöst, wie es Gegenstand von Patentanspruch 1 ist.

In der älteren, nicht vorveröffentlichten EP-A2-0 104 726 werden elektrisch leitfähige Systeme beschrieben, die Pyrrolpolymerisate und polymere Leitsalze als Dopierungsmittel enthalten. Niedermolekulare Leitsalze der oben genannten Art werden nicht erwähnt.

Bei den erfindungsgemäß hergestellten feinteiligen Pyrrol-Polymerisaten handelt es sich um elektrisch hochleitfähige Systeme, die zumindest sauerstoffhaltige Oxidationsmittel oder sonstige anwesende Leitsalze enthalten. Die Leitfähigkeit liegt zwischen $10^{-2}$ bis 10, vorzugsweise zwischen $10^{-1}$ und 5 und insbesondere zwischen 0 und 2,6 S/cm. Der mittlere Teilchendurchmesser kann zwischen 0,05 und 5 mm liegen. Die spezifische Oberfläche liegt im Bereich von 1 bis m²/g. Das IR-Spektrum der feinteiligen erfindungsgemäß hergestellten Pyrrol-Polymerisate unterscheidet sich nicht von den Pyrrol-Polymerisaten, die durch elektrochemische anodische Oxidation erhalten worden sind.

Man kann die erfindumgsgemäß hergestellten feinteiligen Pyrrol-Polymerisate auch als Komplexe der Ionen und der polymeren Pyrrole bezeichnen. Die polymeren Pyrrole besitzen ein hohes mechanisches Niveau und ein ausgewogenes und verbessertes Eigenschaftsbild, insbesondere sehr gute anwendungstechnische Eigenschaften, was sie für die Verwendung zur Herstellung von Formkörpern geeignet macht.

Für das erfindungsgemäße Verfahren eignen sich Pyrrol selbst als auch die substituierten Pyrrole, wie N-Alkylpyrrole, N-Arylpyrrole, die an den C-Atomen monoalkyl- oder dialkylsubstituierten Pyrrole und die an den C-atomen monohalogen oder dihalogen substituierten Pyrrole. Erfindungsgemäß können Pyrrol allein oder in Mischungen mit anderen Verbindungen aus der Klasse der Pyrrole verwendet werden. Vorzugsweise verwendet man unsubstituiertes Pyrrol selbst. Werden substituierte Pyrrole eingesetzt, so sind das 3,4-Dialkylpyrrol, insbesondere mit 1 bis 4 C-Atomen im Alkylrest, sowie auch die 3,4-Dihalogenpyrrole, insbesondere das 3,4-Dichlorpyrrol bevorzugt.

Es können auch gegebenenfalls geringe Mengen, z. B. zwischen 0,1 und 10 Mol, bezogen auf ein Mol Pyrrol anderer heterocyclischer Verbindungen, die einen konjugierten II-Elektronensystem enthalten, wie Furan, Thiophen oder Thiazol mitverwendet werden.

Zur Herstellung der feinteiligen Pyrrol-Polypermisate werden die Pyrolle in Lösung in Gegenwart von Leitsalzen mit Sauerstoff enthaltende Oxidationsmittel behandelt. Zweckmäßig verwendet man aus 1 Mol Pyrrol bzw. Gemischen aus Pyrrolen untereinander oder mit anderen mit Pyrrolen copolymerisierbaren Verbindungen 0,2 bis 10 Mol des Oxidationsmittels. Verwendet man weniger als 1 Mol, so kann man feststellen, daß ein Teil der verwendeten Ausgangssubstanz nicht zu Polymeren umgewandelt wird. Größere Mengen an Oxidationsmitteln zu verwenden ist nicht erforderlich, da die Menge ausreicht, diè gesamte Menge der Ausgangsstoffe in Polymere umzuwandeln. Ein Überschuß über die angegebene Menge hinaus ist jedoch in den meisten Fällen nicht erforderlich, kann jedoch gelegentlich bestimmte Effekte bewirken. Von den Sauerstoff enthaltenden Oxidationsmitteln haben sich besonders Peroxosäuren und deren Salze, die Peroxodischwefelsäure und deren Alkali- und Ammoniumsalze bewährt. Vorzugsweise werden auch Peroxoborate oder Peroxochromate, wie Natriumperborat oder Kaliumbichromat verwendet. Außerdem sind Permanganate, wie Kaliumpermanganat geeignet, wenn man diesen Permanganaten geringe Mengen Säuren zusetzt. Auch ist bevorzugt die Verwendung von Wasserstoffsuperoxid.

2

Die Herstellung der feinteiligen Pyrrol-Polymerisate erfolgt in Lösung wobei sich Wasser als Lösungsmittel, ggf. in Abmischung mit organischen mit Wasser mischbaren Lösungsmitteln bewährt haben. Es können aber auch organische Lösungsmittel, wie Dimethylsulfoxid, Methylenchlor, Methanol, Ethanol, Acetonitril, Sulfolan, Ethylencarbonat, Propylencarbonat, Dioxan oder Tetrahydrofuran, verwendet werden. Bei der Verwendung von organischen mit Wasser nicht mischbaren Lösungsmitteln, hat sich das Einarbeiten geringer Wassermengen in feiner Verteilung in das organische Lösungsmittel bewährt. Vorzugsweise wird zur Herstellung der feinteiligen Pyrrole jedoch Wasser verwendet. Man arbeitet zweckmäßig so, daß die Lösungen 0,1 bis 50, vorzugsweise 1 bis 5 Gew.-% des Pyrrols oder der Gemische der Pyrrole, ggf. mit anderen Verbindungen enthalten. Die Menge der zuzusetzenden Oxidationsmitteln wird nach dem oben angegebenen Prinzip gemessen. Die Umsetzung kann zweckmäßig in einem Temperaturbereich von 0 bis 100°, vorzugsweise von 15 bis 40° C erfolgen. Meistens bekommt man zu zufriedenstellenden Ergebnissen, wenn die Umsetzung bei Raumtemperatur durchgeführt wird.

Den Lösungen werden Leitsalze zugesetzt, die beim Ausscheiden des feinteiligen Polymeren die Polymerstruktur mit eingebaut werden, so daß die Leitfähigkeit der erhaltenen feinteiligen Polymerisate hierdurch positiv beeinflußt wird. Diese Leitsalze werden auch als Komplexierungsmittel oder Dotierungsmittel und im englischen Sprachgebrauch als doping-agents bezeichnet.

Die Konzentration der Leitsalze ist so bemessen, daß auf 3 Mol des eingesetzten Pyrrols oder den anderen Monomeren mindestens 1 Mol der oben aufgeführten Leitsalze verwendet werden.

Die erfindungsgemäß hergestellten feinteiligen Pyrrol-Polymeren, die auch als feinpulvrige Pyrrol-Polymere bezeichnet werden können, eignen sich insbesondere zur Herstellung von Formkörpern. Diese Formkörper können z. B. als Elektroden-Katalysatoren, Diaphragmen, elektrische Speichersysteme, Batterien, Schalter, Halbleiterbauteile, Abschirmmaterialien, Solarzellen verwendet werden. In feinteiliger Form können die Pyrrol-Polymeren zur antistatischen Ausrüstung von Kunststoffen dienen.

Bei der Herstellung von Formteilen können die üblichen Verfahren des Verpressens der Polymeren unter Druck und Temperatur Anwendung finden. So hat es sich, wie bereits aus der ältern nicht vorveröffentlichten Patentanmeldung EP-A-101 894 hervorgeht, bewährt, in einem Temperaturbereich von 150 bis 300° C und bei Drucken von mindestens 50 bar, vorzugsweise zwischen 100 und 200 bar, zu arbeiten. Mitunter ist es zweckmäßig, die erfindungsgemäß hergestellten feinteiligen Pyrrol-Polymerisate zusammen mit anderen nicht leitfähigen thermoplastischen Kunststoffen zu Formteilen zu verarbeiten, wenn die Eigenschaften entsprechend abgewandelt werden sollen. Auch können die feinteiligen Pyrrol-Polymerisate zusammen mit Produkten, die eine höhere Leitfähigkeit haben, bei der Herstellung von Formkörpern Anwendung finden. Die Erfindung wird durch die nachfolgenden Beispiele näher erläutert. Die in den Beispielen angegebenen Teile sind Gewichtsteile, Prozente, Gewichtsprozente.

**Beispiele 1 bis 11**

13,4 Teile Pyrrol werden mit 50 Teilen eines Methanol/Wassergemisches (1:1) versetzt und die in der Tabelle angegebenen Teile eines Salzes oder einer Säure zugefügt, dann werden bei 20° C unter Eiskühlung 47,6 Teile Natriumperoxidsulfat in 100 Teilen Wasser zugefügt. Das entstehende Pulver wird abgesaugt, mit Wasser neutral gewaschen und mit Methanol gespült anschließend 8 h bei 0,5 Torr und 50° C getrocknet.

Die feinpulvrigen Materialien wurden jeweils zu einer Tablette verpreßt, an der die Leitfähigkeit gemessen wurde.

In der folgenden Tabelle 1 sind die Ergebnisse des erfindungsgemäßen Verfahrens zusammengefaßt.

**Tabelle 1**

| Nr. | Art | Zusatz Gew.-Teile | spez. elektr. Leitfähigkeit S/cm |
|---|---|---|---|
| 1 | | 15,7 | 3,0 |
| 2 | $KBF_4$ | 12 | 2,4 |
| 3 | $NaF$ | 8 | 1,4 |
| 4 | $KPF_6$ | 5 | 2,3 |
| 5 | $K_2IrF_6$ | 10 | 5,9 |
| 6 | $K_2SiF_6$ | 14,5 | 7,8 |
| 7 | $K_3AlF_6$ | 13,2 | 2,3 |
| 8 | $K_3AlF_6$ | 16,5 | 3,5 |
| 9 | $K_2TiF_6$ | 5,5 | 6,8 |
| 10 | $K_2NiF_6$ | 10 | 8,5 |
| 11 | $K_2ZrF_6$ | 8 | 6,5 |

FIG1/15

## Patentansprüche

1. Verfahren zur Herstellung von feinteiligen elektrisch leitfähigen Pyrrol-Polymerisaten, bei dem man Pyrrol oder substituierte Pyrrole für sich allein oder im Gemisch untereinander oder im Gemisch mit anderen mit Pyrrolen copolymerisierbaren Verbindungen in Lösung und Gegenwart von Leitsalzen mit Sauerstoff enthaltenden Oxidationsmittel, benandelt, dadurch gekennzeichnet, daß die Lösungen NaF, $LiClO_4$, $NEt_4ClO_4$, $NBu_4ClO_4$, $Na_3AlF_6$, $KBF_4$, $K_2TiF_6$, $K_2ZrF_6$, $K_2NiF_4$, $FeCl_3$, $NoPF_6$, $KAsF_6$, $NaPF_6$, $KPF_6$, $K_2IrF_6$, $K_2SiF_6$, $K_3AlF_6$, $K_2NiF_6$ oder Benzolsulfonsäure, enthalten.

2. Verfahren nach Patentanspruch 1, dadurch gekennzeichnet daß man als Oxidationsmittel Peroxosäuren oder deren Salze oder Wasserstoffsuperoxid verwendet.

## Claims

1. A process for the preparation of a finely divided electrically conductive pyrrole polymer, in which a pyrrole or a substituted pyrrole, either alone or in admixture with one another or with other compounds which are copolymerizable with pyrroles, are treated, in solution and in the presence of a conductive salt, with an oxygen-containing oxidizing agent, characterized in that the solution contains NaF, $LiClO_4$, $NEt_4ClO_4$, $NBu_4ClO_4$, $Na_3AlF_6$, $KBF_4$, $K_2TiF_6$, $K_2ZrF_6$, $K_2NiF_4$, $FeCl_3$, $NO_2PF_6$, $NOPF_6$, $KAsF_6$, $NaPF_6$, $KPF_6$, $K_2IrF_6$, $K_2SiF_6$, $K_3AlF_6$, $K_2NiF_6$ or benzenesulfonic acid.

2. A process as claimed in claim 1, characterized in that the oxidizing agent used is a peroxo acid or one of its salts or hydrogen peroxide.

## Revendications

1. Procédé de préparation de polymères pyrroliques conducteurs de l'électricité en fines particules, dans lequel le pyrrole ou des pyrroles substitués, seuls ou en mélange entre-eux ou en mélange avec d'autres composés copolymérisables avec les pyrroles, sont traités en solution et en présence de sels conducteurs avec des agents d'oxydation contenant de l'oxygène, caractérisé en ce que les solutions contiennent du NaF, du $LiClO_4$, du $NEt_4ClO_4$, du $NBu_4ClO_4$, du $Na_3AlF_6$, du $KBF_4$, du $K_2TiF_6$, du $K_2ZrF_6$, du $K_2NiF_4$, du $FeCl_3$, du $NO_2PF_6$, du $NOPF_6$, du $KAsF_6$, du $NaPF_6$, du $KPF_6$, du $K_2IrF_6$, du $K_2SiF_6$, du $K_3AlF_6$, du $K_2NiF_6$ ou de l'acide benzènesulfonique.

2. Procédé suivant la revendication 1, caractérisé en ce que l'agent d'oxydation est choisi parmi les peroxo-acides et les sels de ceux-ci et le peroxyde d'hydrogène.